(19) Europäisches Patentamt / European Patent Office / Office européen des brevets

(11) **EP 3 936 369 B1**

(12) **EUROPEAN PATENT SPECIFICATION**

(45) Date of publication and mention
of the grant of the patent:
**21.06.2023 Bulletin 2023/25**

(51) International Patent Classification (IPC):
**B60L 5/26** *(2006.01)* **B60M 1/28** *(2006.01)*
**G01B 11/00** *(2006.01)*

(21) Application number: **19917672.8**

(52) Cooperative Patent Classification (CPC):
**G01B 11/026; B60L 5/26; B60M 1/28; G06T 7/13;
G06T 7/248;** G01P 15/093; G06T 2207/30204

(22) Date of filing: **20.12.2019**

(86) International application number:
**PCT/JP2019/050037**

(87) International publication number:
**WO 2020/179194 (10.09.2020 Gazette 2020/37)**

(54) **PANTOGRAPH DISPLACEMENT MEASURING DEVICE, AND TROLLEY-WIRE HARD-SPOT
DETECTION METHOD**

VORRICHTUNG ZUR MESSUNG DER PANTOGRAFVERSCHIEBUNG UND VERFAHREN ZUR
DETEKTION VON HARTEN STELLEN AN OBERLEITUNGEN

DISPOSITIF DE MESURE DE DÉPLACEMENT DE PANTOGRAPHE ET PROCÉDÉ DE DÉTECTION
DE POINT DUR DE CÂBLE CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2019 JP 2019041934**

(43) Date of publication of application:
**12.01.2022 Bulletin 2022/02**

(73) Proprietor: **Meidensha Corporation
Tokyo 141-6029 (JP)**

(72) Inventors:
• **YAMAMOTO Taiki
Tokyo 141-6029 (JP)**
• **WATABE Yusuke
Tokyo 141-6029 (JP)**

(74) Representative: **Murgitroyd & Company
Murgitroyd House
165-169 Scotland Street
Glasgow G5 8PL (GB)**

(56) References cited:
WO-A1-2010/084919    JP-A- H08 336 204
JP-A- 2000 343 986    JP-A- 2001 235 310
JP-A- 2002 139 305    JP-A- 2008 104 312
JP-A- 2010 169 506    JP-A- 2010 266 341
JP-A- 2013 044 694

Note: Within nine months of the publication of the mention of the grant of the European patent in the European Patent
Bulletin, any person may give notice to the European Patent Office of opposition to that patent, in accordance with the
Implementing Regulations. Notice of opposition shall not be deemed to have been filed until the opposition fee has been
paid. (Art. 99(1) European Patent Convention).

## Description

## TECHNICAL FIELD

The present invention relates to a pantograph displacement measuring device and a trolley-wire hard-spot detection method, particularly to a pantograph displacement measuring device and a trolley-wire hard-spot detection method in which images of a pantograph to which markers for measuring hard spots have been affixed, captured by a line sensor camera, are used to measure hard spots on a trolley wire by means of a pattern matching process.

## BACKGROUND

In electric railway facilities, one of the inspection categories is the measurement of hard spots on a trolley wire. For example, a trolley wire is suspended, by hangers, from a messenger wire. At the places where these hangers are installed, and aside therefrom, at the places where the trolley wire is connected and at portions where there are pull-offs, the weight of the trolley wire is partially increased in comparison with other portions. These portions are known as "trolley-wire hard spots".

When a pantograph, which is a power collecting device that is installed on the roof of a vehicle and that slides along the trolley wire, passes these trolley-wire hard spots, the weight of the trolley wire can sometimes cause the pantograph to suddenly drop. In such a case, the trolley wire becomes separated from the pantograph and an electrical discharge phenomenon known as arcing occurs. At this time, heat generated by the arcing creates localized wear in the trolley wire. For this reason, wear can be considered to progress more quickly at hard spots on a trolley wire than at other portions.

For the above reason, the detection of hard sports on a trolley wire is an important matter for the purposes of maintaining and operating/managing electric railway facilities.

As mentioned above, a large vertical acceleration occurs in pantographs at the hard spots on a trolley wire. Therefore, hard spots on a trolley wire can be detected by monitoring the vertical acceleration of a pantograph in which the displacement is equivalent to that of the trolley wire. The acceleration of a pantograph can be determined by measuring the displacement of the pantograph and taking the second derivative thereof.

Conventionally, the pantograph displacement measuring methods indicated below are known.

(1) Laser sensor system

In this system, a pantograph is scanned with a laser beam by means of a mirror or the like, and the displacement of the pantograph is measured by phase differences in reflected waves, deformation of the shape of reflected laser beams, or the like.

(2) Light interruption system

In this system, the displacement of a pantograph is measured by projecting light in stripes onto a pantograph and receiving light from the stripes, which have become uneven in accordance with the shape of the pantograph.

(3) Image processing system

In this system, the displacement of a pantograph is measured by capturing an image of a pantograph installed on the roof of a vehicle with a line sensor camera, and processing the captured image by model matching, pattern matching, or the like in a processing computer (see, for example, Patent Documents 1 and 2).

Among the abovementioned systems, the image processing system involves extracting, from an image of a pantograph captured by a line sensor camera, pixel positions in the image matched with a pantograph model that has been prepared in advance, and computing the actual height of the pantograph from the pixel positions in the image based on the distance from the line sensor camera to the pantograph, the focal length of a lens in the imaging equipment, and the like.

This image processing system involves detecting, in a captured pantograph image, pixel positions matching those in the pantograph model that was acquired in advance, or affixing white and black striped markers to a pantograph installed on the roof of a vehicle, and detecting the marker positions, i.e., the position of the pantograph, by pattern matching from an image captured by the line sensor camera.

Furthermore, after the position of the pantograph in the image has been detected, the pixel positions in the image are converted to actual pantograph displacement from relationships such as the distance to the pantograph, the focal length of the lens, and the like. The acceleration is computed by taking the second derivative of the pantograph displacement determined in this way. Additionally, by using a line sensor camera as in Patent Document 2, the spatial resolution can be raised, thereby increasing the accuracy. With this system, the device becomes more compact in comparison with the laser sensor system or the light interruption system. Thus, this system has the advantage of being able to be mounted not only on an inspection car produced exclusively for measurement, but also on a commercial car.

Further the disclosures of JP 2010 169506 A, JP 2013 044694 A and JP 2000 343986 A may be helpful for understanding the present invention. More specifically JP 2010 169506 A has aims at providing a contact force measuring device and method, accurately measuring both a contact force of a pantograph such as a single arm having a smaller number of springs, and a contact force of a pantograph with multi-split sliders having many springs. In order to achieve this aim, the measuring device is provided with a photographing means composed of an area camera or the like for picking up an image of the springs of a pantograph while partially designating a photographing range and enhancing time resolution. An image processing means is used for detecting the springs in the image by image processing and a contact force calculation means is used to evaluate a contact force by adding spring reaction forces and inertial forces of the springs detected by the image processing means.

## CITATION LIST

### PATENT LITERATURE

Patent Document 1: JP 2010-266341 A
Patent Document 2: JP 2018-146553 A
Patent Document 3: JP 2010-169505 A
Patent Document 4: JP 2006-248411 A

## SUMMARY OF INVENTION

### TECHNICAL PROBLEM

In systems using a line sensor camera, only an image of a single line can be captured. Therefore, the positional deviation of a pantograph that can be measured by using a single line sensor camera is that of only one arbitrarily defined point, and in order to measure the acceleration of the pantograph corresponding to positional deviation fluctuations in an overhead wire, it is necessary to install multiple line sensor cameras and to measure the displacement at multiple locations on the pantograph. However, there was a problem in that installing multiple line sensor cameras leads to larger devices and cost increases.

For these reasons, an objective of the present invention is to provide a pantograph displacement measuring device and a trolley-wire hard-spot detection method that allow pantograph displacement corresponding to positional deviation fluctuations in an overhead wire to be measured with high accuracy and with a simple structure.

### SOLUTION TO PROBLEM

The present invention refers to a pantograph displacement measuring device according to claim 1 and a trolley-wire hard-spot detection method according to claim 5. Advantageous embodiments may include features of depending claims.

Additionally, in a pantograph displacement measuring device according to an embodiment of the present invention

the overhead-wire positional deviation measuring device is a line sensor camera that is installed so that an optical axis thereof is directed approximately straight upwards and a scan line direction thereof is along the vehicle width direction of the railway vehicle.

Additionally, in a pantograph displacement measuring device according to an embodiment pf the present invention

the overhead-wire positional deviation measuring device is a ranging sensor that projects laser light in a radiating manner around an axis parallel to an advancement direction of the railway vehicle, and that measures a distance and an angle to a measurement target by receiving the reflected light.

Additionally, in a pantograph displacement measuring device according to an embodiment of the present invention

the overhead-wire positional deviation measuring device is the area sensor camera, and

the image processing device acquires a positional deviation of the overhead wire by analyzing the input image.

Additionally, in a trolley-wire hard-spot detection method according to an embodiment of the present invention the overhead-wire positional deviation measuring device is a line sensor camera that is installed so that an optical axis thereof is directed approximately straight upwards and a scan line direction thereof is along the vehicle width direction of the railway vehicle.

Additionally, in a trolley-wire hard-spot detection method according to an embodiment of the present invention the overhead-wire positional deviation measuring device is a ranging sensor that projects laser light in a radiating manner around an axis parallel to an advancement direction of the railway vehicle, and that measures a distance and an angle to a measurement target by receiving the reflected light.

Additionally, in a trolley-wire hard-spot detection method according to an embodiment of the present invention

the overhead-wire positional deviation measuring device is the area sensor camera, and

the image processing device acquires a positional deviation of the overhead wire by analyzing the input image.

## EFFECTS OF INVENTION

With the pantograph displacement measuring device and the trolley-wire hard-spot detection method according to the present invention, images captured by a single area sensor camera can be used to measure, with high accuracy and with a simple structure, pantograph displacement corresponding to positional deviation fluctuations in an overhead wire.

## BRIEF DESCRIPTION OF DRAWINGS

Fig. 1 is an explanatory diagram schematically illustrating an example of installation of a pantograph displacement measuring device according to Embodiment 1 of the present invention.

Fig. 2 is an explanatory diagram schematically illustrating an example of installation of markers by the pantograph displacement measuring device according to Embodiment 1 of the present invention.

Fig. 3 is a block diagram indicating a schematic configuration of the pantograph displacement measuring device according to Embodiment 1 of the present invention.

Fig. 4 is a flow chart indicating the flow of a pantograph measurement process according to Embodiment 1 of the present invention.

Fig. 5 is an explanatory diagram illustrating an image capture area of an area sensor camera in Embodiment 1 of the present invention.

Fig. 6 is an explanatory diagram illustrating an example of a marker image in Embodiment 1 of the present invention.

Fig. 7 is an explanatory diagram illustrating an example of a template image in Embodiment 1 of the present invention.

Fig. 8 is an explanatory diagram illustrating the position of a marker that is detected in Embodiment 1 of the present invention.

Fig. 9 is an explanatory diagram illustrating an example in which three-dimensional spline interpolation is performed in Embodiment 1 of the present invention.

Fig. 10 is a graph indicating an example of height-direction acceleration of a pantograph corresponding to overhead-wire positional deviations determined by the acceleration calculation unit shown in Fig. 3.

Fig. 11 is an explanatory diagram schematically illustrating an example of installation of a pantograph displacement measuring device according to Embodiment 2 of the present invention.

Fig. 12 is a block diagram indicating a schematic configuration of the pantograph displacement measuring device according to Embodiment 2 of the present invention.

Fig. 13 is an explanatory diagram schematically illustrating an example of installation of a pantograph displacement measuring device according to Embodiment 3 of the present invention.

Fig. 14 is a block diagram indicating a schematic configuration of the pantograph displacement measuring device according to Embodiment 3 of the present invention.

## DESCRIPTION OF EMBODIMENTS

Hereinafter, the pantograph displacement measuring device and the trolley-wire hard-spot detection method according to the present invention will be explained with reference to the drawings.

### Embodiment 1

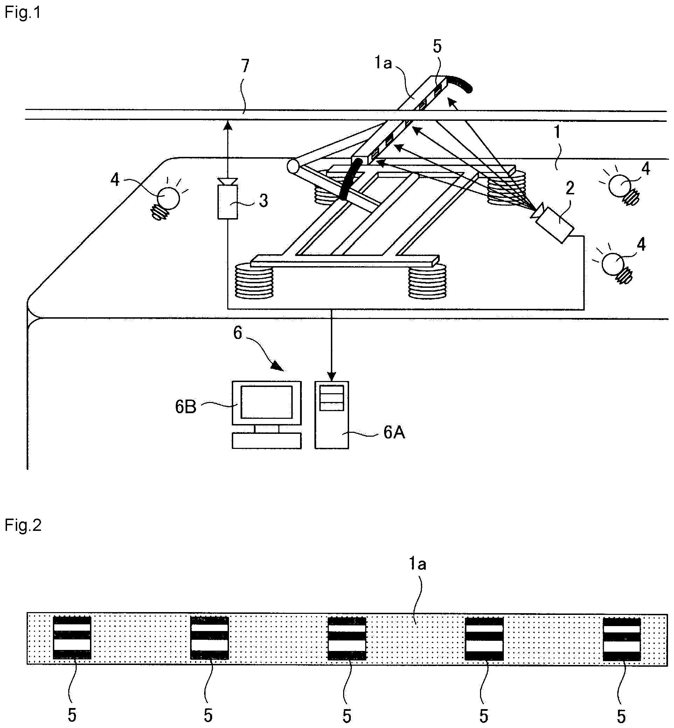

The pantograph displacement measuring device and the trolley-wire hard-spot detection method according to Embodiment 1 of the present invention will be explained by using Fig. 1 to Fig. 10.

As illustrated in Fig. 1, a pantograph height measuring device in the present embodiment is composed of an area sensor camera 2, a line sensor camera 3, and illumination devices 4 installed on the roof of a railway vehicle (hereinafter referred to simply as a "vehicle"), markers 5 affixed to a pantograph 1a, and a processing computer 6 installed inside the vehicle 1.

The area sensor camera 2 is installed on the roof of the vehicle 1 so as to capture an image of the pantograph 1a at a position spaced therefrom in the front-rear direction of the vehicle 1. Specifically, the area sensor camera 2 is installed with an orientation such that the optical axis thereof is directed diagonally upwards and the image capture area thereof contains the entire movement range of the pantograph 1a. Image signals acquired by this area sensor camera 2 are input to the processing computer 6.

The line sensor camera 3 is installed on the roof of the vehicle 1 so as to capture images of an overhead wire (trolley wire) 7 in order to measure the positional deviation of the overhead wire 7. That is, the line sensor camera 3 is installed with an orientation such that the optical axis thereof is directed approximately straight upwards and the scan line direction thereof is along the vehicle width direction of the vehicle 1. Image signals acquired by this line sensor camera 3 are input to the processing computer 6.

The illumination devices 4 shine light on the area captured by the area sensor camera 2 and the area captured by the line sensor camera 3. In the present embodiment, there are two illumination devices 4 provided so as to correspond to the area sensor camera 2, and one illumination device 4 provided so as to correspond to the line sensor camera 3.

A plurality of markers 5 are installed on the end surface of the pantograph 1a towards the area sensor camera 2, so as to be spaced therefrom in the vehicle width direction, as illustrated in Fig. 2. The markers 5 are formed from a material that reflects light and a material that does not reflect light, and in the present embodiment, the markers 5 have two white lines of different heights arranged so as to be spaced apart on a black background. Thus, the markers 5 are in a state in which the two white portions comprising a material that reflects light and the three black portions comprising a material that does not reflect light are arranged in an alternating manner.

The processing computer 6 analyzes the images input from the area sensor camera 2 and the line sensor camera 3 to detect height-direction displacement of the pantograph 1a, and has an operation processing unit 6A and a monitor 6B.

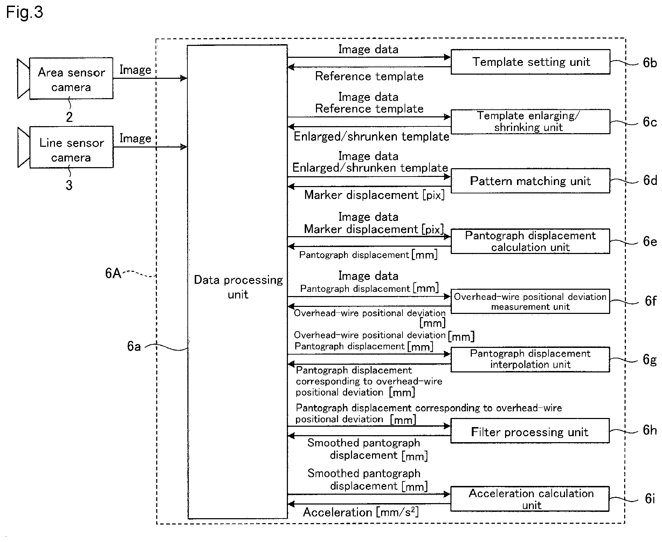

The operation processing unit 6A, as illustrated in Fig. 3, is provided with a data processing unit 6a, a template setting unit 6b, a template enlarging/shrinking unit 6c, a pattern matching unit 6d, a pantograph displacement calculation unit 6e, an overhead-wire displacement measurement unit 6f, a pantograph displacement interpolation unit 6g, a filter processing unit 6h, and an acceleration calculation unit 6i.

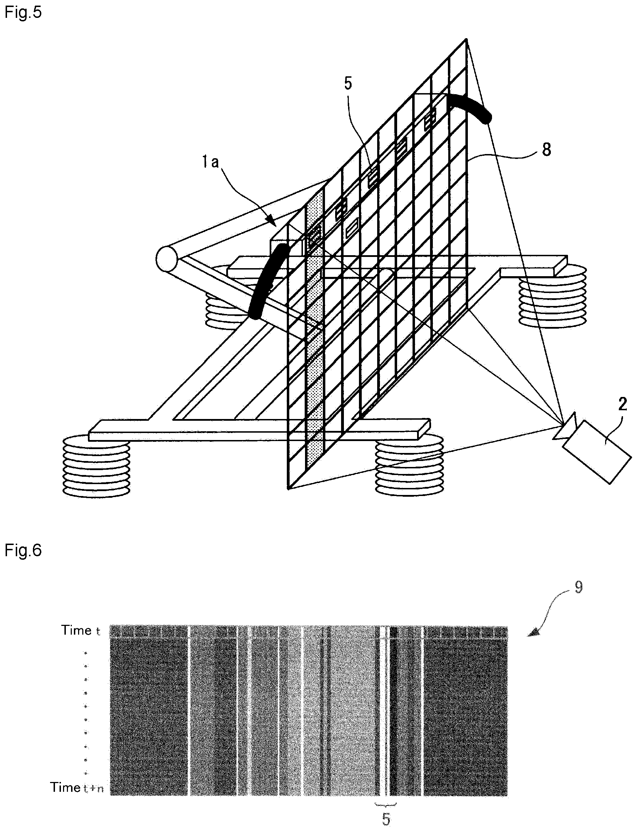

The data processing unit 6a extracts, from an image of the pantograph 1a and the markers 5 captured in advance by the area sensor camera 2 as illustrated in Fig. 5, only lines corresponding to the positions of the respective markers 5 (for example, the line indicated by the dots in Fig. 5; in Fig. 5, the line is widened for explanation), and prepares a marker image 9 as illustrated in Fig. 6. The marker image 9 indicated in Fig. 6 is prepared by rotating clockwise, by 90°, a line corresponding to each marker 5 in an image from a single scan, and arranging a certain number of these in rows in the vertical direction, thereby obtaining an image as if captured by a line sensor camera. The reference number 8 in Fig. 5 indicates the area (image capture area) captured by the area sensor camera 2.

Additionally, the data processing unit 6a performs a process of chronologically arranging pantograph displacements corresponding to overhead-wire positional deviations determined by the pantograph displacement interpolation unit 6g.

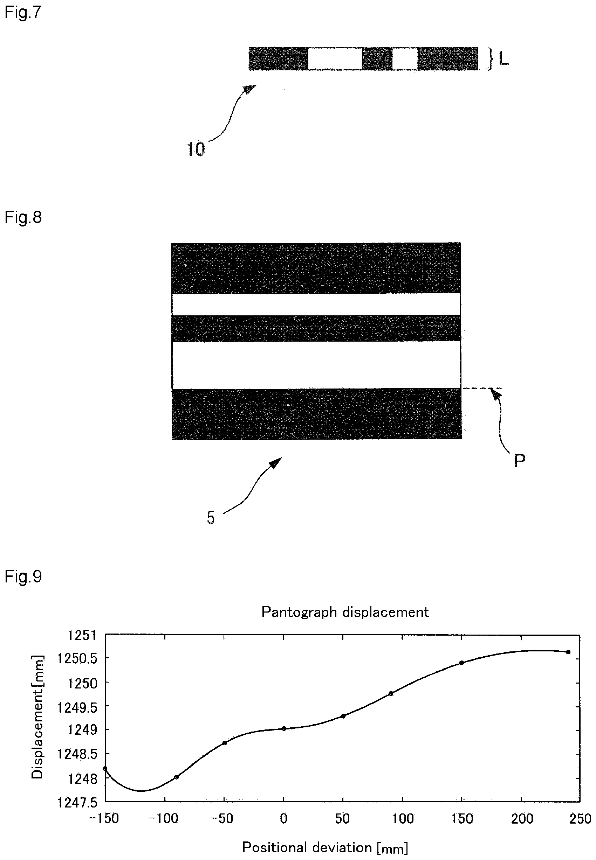

The template setting unit 6b acquires, for each marker 5, a reference template 10 for matching a single line (L) of the marker pattern, as indicated in Fig. 7, from the marker image 9 indicated in Fig. 6. In other words, the reference templates 10 are sets of one-dimensional luminance value data comprising white areas and black areas obtained by extracting the marker portions from the marker images 9. The reference templates 10 are transmitted, via the data processing unit 6a, to the template enlarging/shrinking unit 6c.

The template enlarging/shrinking unit 6c laterally divides, into an arbitrary number, an image (hereinafter referred to as the input image) captured by the area sensor camera 2 while the vehicle 1 is traveling, and enlarges/shrinks the reference templates 10 for the respective divided sections based on the resolution of each pixel. The resolution of each pixel is determined by a known technique, such as the calibration method in the above-mentioned Patent Document 3. Thus, a detailed explanation will be omitted here.

The pattern matching unit 6d detects the displacement [pix] of each marker 5 by calculating the similarity between the input image and the reference template 10 corresponding to each marker 5 while performing the template enlarging/shrinking process. ZNCC, which is a type of normalized cross-correlation, is used for calculating the similarity between the input image and the reference template 10. Specifically, while scanning one pixel at a time, the similarity between the input image and the reference template 10 is computed, and the coordinate [pix] of the position at which the similarity became the greatest is determined as the displacement. The displacement [pix] of the marker 5 obtained by the pattern matching unit 6d is transmitted to the pantograph displacement calculation unit 6e via the data processing unit 6a.

Since the displacement [pix] of each marker 5 determined in the pattern matching process is an approximate displacement, in order to obtain a more precise displacement of each marker 5, the pantograph displacement calculation unit 6e finds, by means of edge detection, the lower end P of the lower white line of the two white lines on the marker 5 as illustrated in Fig. 8, within the range of the detected marker 5, and performs sub-pixel estimation to detect the displacement [pix] of the marker 5. The displacement [pix] of the marker 5 detected in this way is converted to actual displacement [mm], and the actual height-direction displacement (hereinafter referred to as the pantograph displacement) [mm] of the pantograph 1a is computed by considering the distance from the lower end of the lower white line on the marker 5 to the upper surface of the pantograph 1a, which was measured in advance. As the technique for converting the displacement [pix] of the marker 5 to the actual displacement [mm], a known technique may be used, such as by multiplying a calibration coefficient that has been determined by the calibration method in the above-mentioned Patent Document 3 with the displacement [pix] of the marker 5. Thus, a detailed explanation will be omitted here. The pantograph displacement [mm] obtained by the pantograph displacement calculation unit 6e is transmitted to the overhead-wire displacement measurement unit 6f via the data processing unit 6a.

The overhead-wire positional deviation measurement unit 6f measures deviation positions (hereinafter referred to as "overhead-wire positional deviations") [mm] of the overhead wire 7 based on images captured by the line sensor camera 3. As the technique for determining the overhead-wire positional deviations based on the images captured by the line sensor camera 3, a known technique such as, for example, edge detection of a trolley-wire wear portion, as disclosed in the above-mentioned Patent Document 4, is used. Thus, a detailed explanation will be omitted here. The overhead-wire positional deviations [mm] obtained by the overhead-wire displacement measurement unit 6f are transmitted to the pantograph displacement interpolation unit 6g via the data processing unit 6a.

The pantograph displacement interpolation unit 6g determines, from the overhead-wire positional deviations [mm] determined by the overhead-wire positional deviation measurement unit 6f, the markers 5, among the plurality of markers 5, between which the overhead wire 7 is located, and performs spline interpolation using the displacements [mm] of the markers 5 near the overhead wire 7 to determine the pantograph displacements [mm] corresponding to the overhead-wire positional deviations [mm]. Specifically, as indicated in Fig. 9, the displacement position (the coordinates indicated by the black circles in Fig. 9) of each marker is input, and the pantograph displacements f(x) [mm] for arbitrary overhead-wire positional deviations x are determined by the three-dimensional spline interpolation equation indicated by Expression (1) below. In Expression (1) below, a, b, c, and d are coefficients of the piecewise polynomials for spline interpolation.

$$(1) \qquad f(x) = a(x - x_i)^3 + b(x - x_i)^2 + c(x - x_i) + d$$

(where i = 0, 1, 2, 3, ..., N - 1 (N being the number of markers 5))

The pantograph displacements [mm] corresponding to the overhead-wire displacements obtained by the pantograph displacement interpolation unit 6g are transmitted to the filter processing unit 6h via the data processing unit 6a.

The filter processing unit 6h performs a smoothing process on the pantograph displacements [mm] corresponding to overhead-wire positional deviations [mm] determined by the pantograph displacement interpolation unit 6g and chronologically arranged by the data processing unit 6a. The smoothed pantograph displacements [mm] obtained by the filter processing unit 6h are transmitted to the acceleration calculation unit 6i via the data processing unit 6a.

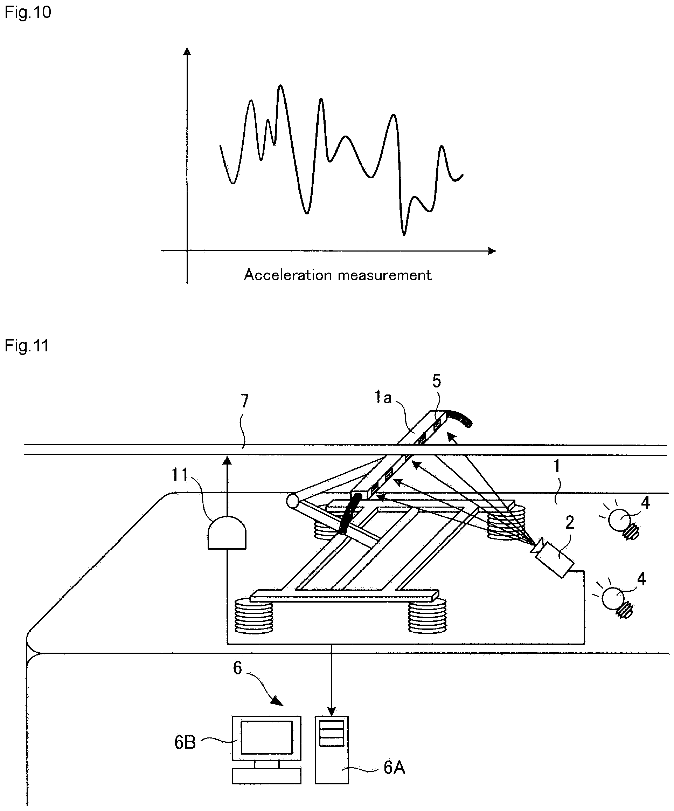

The acceleration calculation unit 6i takes the second derivative of the smoothed pantograph displacements [mm] determined by the filter processing unit 6h, and computes height-direction accelerations [mm/s$^2$] of the pantograph 1a corresponding to the overhead-wire positional deviations [mm], as illustrated in Fig. 10. In the present embodiment, an acceleration [mm/s$^2$] of 20 G is used as a hard spot detection reference (positions at which the height-direction acceleration of the pantograph 1a is 20 G or greater are detected as hard spots). The accelerations [mm/s$^2$] obtained by the acceleration calculation unit 6i are output and displayed on the monitor 5B via the data processing unit 6a.

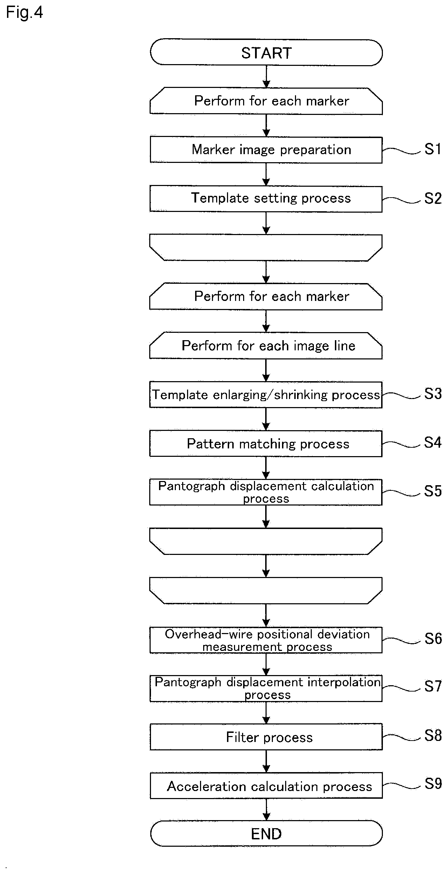

Next, the trolley-wire hard-spot detection method performed by the processing computer 6 will be briefly explained by using Fig. 4.

As indicated in Fig. 4, in the processing computer 6, first, a marker image 9 corresponding to the position of each marker 5 is prepared by the data processing unit 6a from an image that was captured in advance by the area sensor camera 2 (step S1), and a reference template 10 is acquired from the marker image 9 by the template setting unit 6b (step S2). The process from step S1 to step S2 is performed separately for each marker 5.

Next, the reference template 10 is enlarged/shrunken by the template enlarging/shrinking unit 6c relative to an input image captured by the area sensor camera 2 while the vehicle 1 is traveling (step S3), the marker displacement [pix] is detected by the pattern matching unit 6d (step S4), and the pantograph displacement [mm] is determined by the pantograph displacement calculation unit 6e (step S5). The process from step S3 to step S5 is performed for all of the lines in the input image for each marker 5.

Thereafter, overhead-wire positional deviations [mm] are measured by the overhead-wire positional deviation measurement unit 6f (step S6), the pantograph displacements [mm] corresponding to the overhead-wire positional deviations [mm] are determined by the pantograph displacement interpolation unit 6g (step S7), the pantograph displacements [mm] corresponding to the overhead-wire positional deviations [mm] chronologically arranged by the data processing unit 6a are smoothed by the filter processing unit 6h (step S8), and the height-direction accelerations [mm/s$^2$] of the pantograph displacements [mm] corresponding to the overhead-wire positional deviations [mm] are determined by the acceleration calculation unit 6i (step S9).

In this way, the positions at which the height-direction acceleration of the pantograph 1a becomes 20 G or greater are detected as hard spots.

With the pantograph displacement measuring device according to the present embodiment configured in this manner, the height-direction displacement of the pantograph 1a can be measured without contact therewith by analyzing images captured by an area sensor camera 2 and a line sensor camera 3. Thus, the height-direction displacement of the pantograph 1a can be measured not only by operation during hours at which the power is out, such as at night, using a maintenance vehicle, but also by application to normal commercial vehicles, thereby increasing the convenience.

Additionally, height-direction displacement at multiple locations in the vehicle width direction of the pantograph 1a can be measured by using a single area sensor camera 2, thus suppressing the cost.

Additionally, by measuring the displacement of the overhead wire 7 based on images acquired by the line sensor camera 3 in addition to measuring the displacement at multiple locations in the vehicle width direction of the pantograph 1a with the area sensor camera 2, the effect of allowing hard spots to be detected with higher accuracy in correspondence with positional deviation fluctuations of the overhead wire 7 can be obtained.

**Embodiment 2**

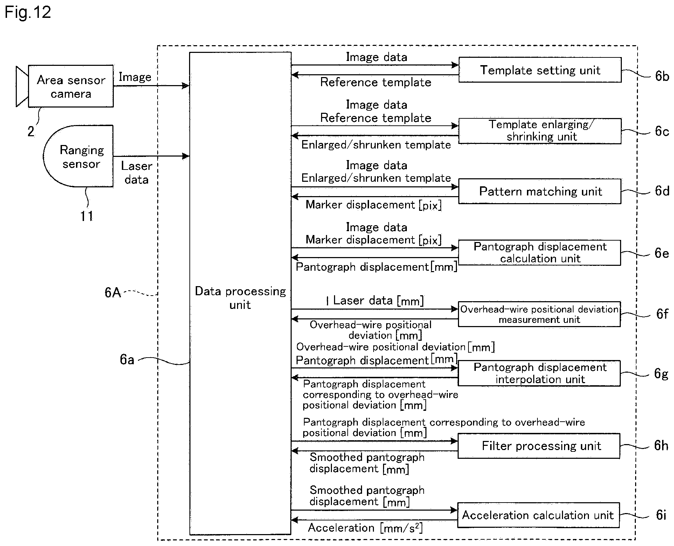

The pantograph displacement measuring device and the trolley-wire hard-spot detection method according to Embodiment 2 of the present invention will be explained by using Fig. 11 and Fig. 12. As indicated in Fig. 11 and Fig. 12, the present embodiment uses a ranging sensor 11 instead of the line sensor camera 3 in Embodiment 1, and the processing in the overhead-wire positional deviation measurement unit 6f is different from that in Embodiment 1 described above. The other features are mostly the same as those explained in Embodiment 1. Thus, hereinafter, the portions having the same functions will be assigned the same reference signs, repetitive explanations will be omitted, and the explanation will focus on the differences.

The ranging sensor 11 projects laser light in a radiating manner around an axis parallel to the advancement direction of the vehicle 1, and measures the distance [mm] and the angle [deg] to a measurement target by receiving the reflected light.

Additionally, the overhead-wire positional deviation measurement unit 6f in the present embodiment removes point group data corresponding to structures other than the overhead wire 7, based on chronological continuity, from point group data (distances [mm] and angles [deg]) acquired by the ranging sensor 11, and prepares point group data corresponding to the overhead wire 7 converted to coordinates (x [mm], y [mm]) that are orthogonal to the advancement direction of the vehicle 1.

Specifically, in scan data acquired by the ranging sensor 11, point group data that is spatially nearby in scan data acquired immediately before is recognized as corresponding to the same object, and it is determined, on the basis of a preset "length of time that the data is assessed as corresponding to the same object", whether the point group data corresponds to the overhead wire 7, or to noise or another structure. Additionally, suspension wires and the like suspending the overhead wire 7 have the same deviation positions as the overhead wire 7 and merely differ in terms of height. Thus, point group data having such characteristics are removed.

If laser data is obtained by distance d [mm] and angle θ [deg], then the coordinates (x, y) of the overhead wire are obtained as (d cosθ and d sinθ).

With the pantograph displacement measuring device and the trolley-wire hard-spot detection method according to the present embodiment configured in this manner, the height-direction displacement of the pantograph 1a can be measured without contact therewith by analyzing images captured by the area sensor camera 2 and the ranging sensor 11. Thus, the height-direction displacement of the pantograph 1a can be measured not only by operation during hours at which the power is out, such as at night, using a maintenance vehicle, but also by application to normal commercial vehicles, thereby increasing the convenience.

Additionally, as with Embodiment 1, height-direction displacement at multiple locations in the vehicle width direction of the pantograph 1a can be measured by using a single area sensor camera 2, thus suppressing the cost.

Additionally, by measuring the displacement of the overhead wire 7 based on scan data acquired by the ranging sensor 11 in addition to measuring the displacement at multiple locations in the vehicle width direction of the pantograph 1a with the area sensor camera 2, the effect of allowing hard spots to be detected with higher accuracy in correspondence with positional deviation fluctuations of the overhead wire 7 can be obtained.

**Embodiment 3**

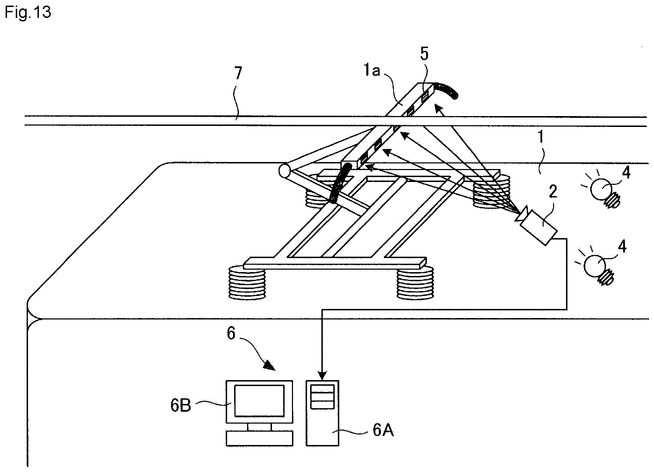

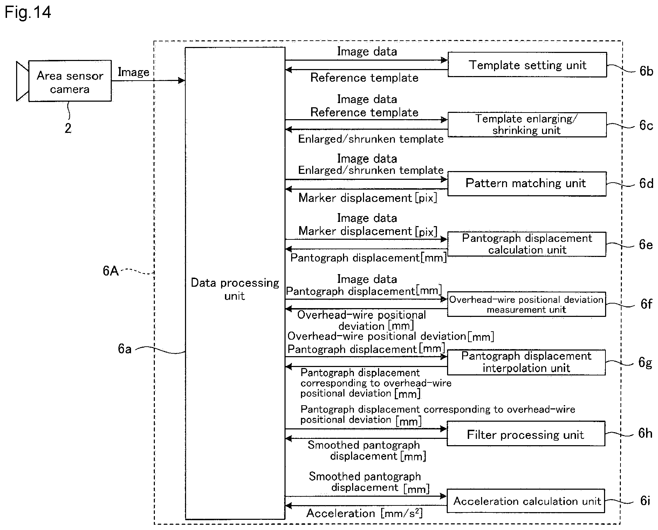

The pantograph displacement measuring device and the trolley-wire hard-spot detection method according to Embodiment 3 of the present invention will be explained by using Fig. 13 and Fig. 14.

In the present embodiment, the line sensor camera 3 and the illumination device 4 that was installed near this line sensor camera 3 are eliminated in comparison with Embodiment 1, and the processing in the overhead-wire positional deviation measurement unit 6f is different from that in Embodiment 1 explained above. The other features are mostly the same as those explained in Embodiment 1. Thus, hereinafter, the portions having the same functions will be assigned the same reference signs, repetitive explanations will be omitted, and the explanation will focus on the differences.

In the present embodiment, the overhead-wire positional deviation is measured by using the area sensor camera 2 in a manner similar to detection of the hard spots. That is, since the vertical positions of the markers 5 and the overhead wire 7 are within a certain range, the overhead-wire positional deviation is detected, in a manner similar to the detection of the displacement of the markers 5, by preparing template images for detecting the overhead wire in advance, and performing pattern matching on input images by using the template images for detecting the overhead wire within a certain range from the positions of the markers 5 after measuring the respective marker displacements [pix].

The overhead wire 7 will not always have the same positional deviation as the markers 5 (it will not always be within a certain range from the positions of the markers 5). Thus, in the present embodiment, linear interpolation is performed on the basis of the positional deviation of the overhead wire 7 at a time at which the overhead wire 7 appeared within a certain range from the position of one marker 5 and the positional deviation of the overhead wire 7 at a later time at which the overhead wire 7 appeared within a certain range from the position of another marker 5, thereby interpolating the overhead-wire positional deviations at times at which the overhead wire 7 was not able to be detected.

In this case, being within a certain range from the position of a marker 5 refers to a position on an upper portion of a slide plate of a pantograph 1a above each marker 5, within a range in which an image of the overhead wire 5 can be captured. Additionally, the template image is an image in which the overhead wire 7 actually appears.

With the pantograph displacement measuring device according to the present embodiment configured in this manner, the height-direction displacement of the pantograph 1a can be measured without contact therewith by analyzing images captured by the area sensor camera 2. Thus, the height-direction displacement of the pantograph 1a can be measured not only by operation during hours at which the power is out, such as at night, using a maintenance vehicle, but also by application to normal commercial vehicles, thereby increasing the convenience.

Additionally, as with Embodiment 1, height-direction displacement at multiple locations in the vehicle width direction of the pantograph 1a can be measured by using a single area sensor camera 2, thus suppressing the cost.

Additionally, by determining the positional deviation of the overhead wire 7 from images captured by the area sensor camera 2 in addition to measuring the displacement at multiple locations in the vehicle width direction of the pantograph 1a with the area sensor camera 2, the effect of allowing hard spots to be detected with higher accuracy in correspondence with positional deviation fluctuations of the overhead wire 7 can be obtained.

**REFERENCE SIGNS LIST**

1    Vehicle

1a    Pantograph
2    Area sensor camera
3    Line sensor camera
4    Illumination device[s?]
5    Marker
6    Processing computer
6A    Operation processing unit
6B    Monitor
6a    Data processing unit
6b    Template setting unit
6c    Template enlarging/shrinking unit
6d    Pattern matching unit
6e    Pantograph displacement measurement unit
6f    Overhead-wire positional deviation measurement unit
6g    Pantograph displacement interpolation unit
6h    Filter processing unit
6i    Acceleration calculation unit
7    Overhead wire
8    Image capture area of area sensor camera
9    Marker image
10    Reference template
11    Ranging sensor

**Claims**

1. A pantograph displacement measuring device comprising:

   a plurality of markers (5) affixed, so as to be spaced apart in a vehicle width direction, to an end surface of a pantograph (1a) on a railway vehicle (1);
   an area sensor camera (2) that is installed on a roof of the railway vehicle (1) and that captures an image of the plurality of markers (5);
   an overhead-wire positional deviation measuring device (2,3,11) that is installed on the roof of the railway vehicle (1) and that measures a
   positional deviation of an overhead wire (7) in the vehicle width direction; and
   an image processing device (6) that determines a height-direction displacement of the pantograph (1a) based on an input image captured by the area sensor camera (2) while the railway vehicle (1) is traveling, and that determines a height of the pantograph (1a) by using the height-direction displacement of the pantograph (1a) and the positional deviation of the overhead wire (7) acquired by using the overhead-wire positional deviation measuring device (2, 3, 11), wherein the positional deviation of the overhead wire (7) is used to determine the markers (5) among the plurality of markers (5), between which the overhead wire (7) is located;
   wherein the image processing device (6) determines the height-direction displacement of the pantograph (1a) corresponding to the deviation position of the overhead wire (7) by

   - extracting vertical lines from the image captured by the area sensor camera (2) , each of which corresponds to the position of a respective marker (5),
   - respectively preparing marker images (9) formed by rotating each of the vertical lines by 90 degrees to form rows,
   - preparing from an image that was captured in advance by the area sensor camera (2) reference templates (10) for single lines of the respective markers (5) based on the marker images (9), and
   - using the respective reference templates (10) to perform pattern matching with the input image by comparing the reference templates (10) of the markers (5) among the plurality of markers (5), between which the overhead wire (7) is located, with the marker images (9) of the markers (5) among the plurality of markers (5), between which the overhead wire (7) is located.

2. The pantograph displacement measuring device according to claim 1, wherein:
   the overhead-wire positional deviation measuring device (2,3,11) is a line sensor camera (3) that is installed so that an optical axis thereof is directed approximately straight upwards and a scan line direction thereof is along the vehicle width direction of the railway vehicle (1).

3. The pantograph displacement measuring device according to claim 1, wherein:
the overhead-wire positional deviation measuring device (2,3,11) is a ranging sensor (11) that projects laser light in a radiating manner around an axis parallel to an advancement direction of the railway vehicle (1), and that measures a distance and an angle to a measurement target by receiving the reflected light.

4. The pantograph displacement measuring device according to claim 1, wherein:

the overhead-wire positional deviation measuring device (2,3,11) is the area sensor camera (2), and
the image processing device (6) acquires a horizontal positional deviation of the overhead wire (7) by analyzing the input image.

5. A trolley-wire hard-spot detection method for detecting a hard spot on a trolley wire (7) by capturing an image of a pantograph (1a) on a traveling railway vehicle (1) with an area sensor camera (2) installed on a roof of the railway vehicle (1), and analyzing the image captured by the area sensor camera (3) with an image processing device (6) to determine a height-direction acceleration of the pantograph (1a), wherein the method includes:

a first step of installing a plurality of markers (5) so as to be spaced apart in a vehicle width direction on an end surface of the pantograph (1a) that is captured by the area sensor camera (2);
a second step of capturing an image of the markers (5) with the area sensor camera (2);
a third step of extracting vertical lines from the image captured by the area sensor camera (2), each of which corresponds to the position of a respective marker (5), and respectively preparing marker images (9) formed by rotating each of the vertical lines by 90 degrees to form rows;
a fourth step of preparing reference templates (10) for single lines of the respective markers (5) based on the marker images (9) captured in advance by the area sensor camera (2);
a fifth step of capturing an image of the markers (5) with the area sensor camera (3) while the railway vehicle (1) is traveling;
a sixth step of using the respective reference templates (10) to perform pattern matching with an input image acquired in the fifth step by comparing the reference templates (10) of the respective markers (5) with the marker images (9) of the respective markers (5) to determine a height-direction displacement of the pantograph (1a);
a seventh step of using an overhead-wire positional deviation measuring device (2,3,11) installed on the roof of the railway vehicle (1) to measure a positional deviation of the overhead wire (7) in the vehicle width direction ; and
an eighth step of determining an acceleration of the pantograph (1a) corresponding to the deviation position of the overhead wire (7) from the height-direction displacement of the pantograph (1a) and the positional deviation of the overhead wire (7), wherein the positional deviation of the overhead wire (7) is used to determine the markers (5) among the plurality of markers (5), between which the overhead wire (7) is located.

6. The trolley-wire hard-spot detection method according to claim 5, wherein:
the overhead-wire positional deviation measuring device (2,3,11) is a line sensor camera (3) that is installed so that an optical axis thereof is directed approximately straight upwards and a scan line direction thereof is along the vehicle width direction of the railway vehicle (1).

7. The trolley-wire hard-spot detection method according to claim 5, wherein:
the overhead-wire positional deviation measuring device (2,3,11) is a ranging sensor (11) that projects laser light in a radiating manner around an axis parallel to an advancement direction of the railway vehicle (1), and that measures a distance and an angle to a measurement target by receiving the reflected light.

8. The trolley-wire hard-spot detection method according to claim 5, wherein:

the overhead-wire positional deviation measuring device (2,3,11) is the area sensor camera (2), and
the image processing device (6) acquires a horizontal positional deviation of the overhead wire (7) by analyzing the input image.

**Patentansprüche**

1. Eine Vorrichtung zum Messen der Stromabnehmerverschiebung, beinhaltend:

    eine Vielzahl von Markierungen (5), die derart, dass sie in einer Fahrzeugbreitenrichtung beabstandet sind, an einer Endfläche eines Stromabnehmers (1a) auf einem Schienenfahrzeug (1) angebracht sind;
    eine Flächensensorkamera (2), die auf einem Dach des Schienenfahrzeugs (1) installiert ist und die ein Bild der Vielzahl von Markierungen (5) erfasst;
    eine Vorrichtung (2, 3, 11) zum Messen einer Oberleitungspositionsauslenkung, die auf dem Dach des Schienenfahrzeugs (1) installiert ist und die eine Positionsauslenkung einer Oberleitung (7) in der Fahrzeugbreitenrichtung misst; und
    eine Bildverarbeitungsvorrichtung (6), die eine Verschiebung des Stromabnehmers (1a) in Höhenrichtung basierend auf einem Eingabebild bestimmt, das von der Flächensensorkamera (2) erfasst wird, während das Schienenfahrzeug (1) fährt, und
    die eine Höhe des Stromabnehmers (1a) durch Verwenden der Verschiebung des Stromabnehmers (1a) in Höhenrichtung und der durch Verwenden der Vorrichtung (2, 3, 11) zum Messen einer Oberleitungspositionsauslenkung erhaltenen Positionsauslenkung der Oberleitung (7) bestimmt, wobei die Positionsauslenkung der Oberleitung (7) verwendet wird, um die Markierungen (5) aus der Vielzahl von Markierungen (5) zu bestimmen, zwischen denen sich die Oberleitung (7) befindet;
    wobei die Bildverarbeitungsvorrichtung (6) die der Auslenkungsposition der Oberleitung (7) entsprechende Verschiebung des Stromabnehmers (1a) in Höhenrichtung durch Folgendes bestimmt:

        - Ausziehen von vertikalen Linien aus dem von der Flächensensorkamera (2) erfassten Bild, die jeweils der Position einer jeweiligen Markierung (5) entsprechen,
        - jeweiliges Erstellen von Markierungsbildern (9), die durch Drehen jeder der vertikalen Linien um 90 Grad, um Zeilen zu bilden, gebildet werden,
        - Erstellen, aus einem Bild, das im Voraus von der Flächensensorkamera (2) erfasst wurde, von Referenzvorlagen (10) für einzelne Linien der jeweiligen Markierungen (5) basierend auf den Markierungsbildern (9) und
        - Verwenden der jeweiligen Referenzvorlagen (10), um durch Vergleichen der Referenzvorlagen (10) der Markierungen (5) aus der Vielzahl von Markierungen (5), zwischen denen sich die Oberleitung (7) befindet, mit den Markierungsbildern (9) der Markierungen (5) aus der Vielzahl von Markierungen (5), zwischen denen sich die Oberleitung (7) befindet, einen Musterabgleich mit dem Eingabebild auszuführen.

2. Vorrichtung zum Messen der Stromabnehmerverschiebung gemäß Anspruch 1, wobei:
    es sich bei der Vorrichtung (2, 3, 11) zum Messen einer Oberleitungspositionsauslenkung um eine Liniensensorkamera (3) handelt, die derart installiert ist, dass eine optische Achse derselben ungefähr gerade nach oben gerichtet ist und eine Abtastliniennrichtung derselben entlang der Fahrzeugbreitenrichtung des Schienenfahrzeugs (1) ist.

3. Vorrichtung zum Messen der Stromabnehmerverschiebung gemäß Anspruch 1, wobei:
    es sich bei der Vorrichtung (2, 3, 11) zum Messen einer Oberleitungspositionsauslenkung um einen Wegmesssensor (11) handelt, der Laserlicht auf strahlende Weise um eine zu einer Fortbewegungsrichtung des Schienenfahrzeugs (1) parallele Achse projiziert und der eine Entfernung und einen Winkel zu einem Messziel durch Empfangen des reflektierten Lichts misst.

4. Vorrichtung zum Messen der Stromabnehmerverschiebung gemäß Anspruch 1, wobei:
    es sich bei der Vorrichtung (2, 3, 11) zum Messen einer Oberleitungspositionsauslenkung um die Flächensensorkamera (2) handelt und die Bildverarbeitungsvorrichtung (6) eine Horizontalpositionsauslenkung der Oberleitung (7) durch Analysieren des Eingabebilds erhält.

5. Ein Erkennungsverfahren für harte Stellen eines Fahrdrahts zum Erkennen einer harten Stelle an einem Fahrdraht (7) durch Erfassen eines Bilds eines Stromabnehmers (1a) auf einem fahrenden Schienenfahrzeug (1) mit einer auf einem Dach des Schienenfahrzeugs (1) installierten Flächensensorkamera (2) und Analysieren des von der Flächensensorkamera (3) erfassten Bilds mit einer Bildverarbeitungsvorrichtung (6), um eine Beschleunigung des Stromabnehmers (1a) in Höhenrichtung zu bestimmen, wobei das Verfahren Folgendes umfasst:

    einen ersten Schritt des Installierens einer Vielzahl von Markierungen (5) derart, dass sie in einer Fahrzeugbreitenrichtung beabstandet sind, auf einer Endfläche des Stromabnehmers (1a), die von der Flächensensorkamera (2) erfasst wird;

einen zweiten Schritt des Erfassens eines Bilds der Markierungen (5) mit der Flächensensorkamera (2);

einen dritten Schritt des Ausziehens von vertikalen Linien aus dem von der Flächensensorkamera (2) erfassten Bild, die jeweils der Position einer jeweiligen Markierung (5) entsprechen, und jeweiliges Erstellen von Markierungsbildern (9), die durch Drehen jeder der vertikalen Linien um 90 Grad, um Zeilen zu bilden, gebildet werden;

einen vierten Schritt des Erstellens von Referenzvorlagen (10) für einzelne Linien der jeweiligen Markierungen (5) basierend auf den im Voraus von der Flächensensorkamera (2) erfassten Markierungsbildern (9);

einen fünften Schritt des Erfassens eines Bilds der Markierungen (5) mit der Flächensensorkamera (3), während das Schienenfahrzeug (1) fährt;

einen sechsten Schritt des Verwendens der jeweiligen Referenzvorlagen (10), um durch Vergleichen der Referenzvorlagen (10) der jeweiligen Markierungen (5) mit den Markierungsbildern (9) der jeweiligen Markierungen (5) einen Musterabgleich mit einem in dem fünften Schritt erhaltenen Eingabebild auszuführen, um eine Verschiebung des Stromabnehmers (1a) in Höhenrichtung zu bestimmen;

einen siebten Schritt des Verwendens einer auf dem Dach des Schienenfahrzeugs (1) installierten Vorrichtung (2, 3, 11) zum Messen einer Oberleitungspositionsauslenkung, um eine Positionsauslenkung der Oberleitung (7) in der Fahrzeugbreitenrichtung zu messen; und

einen achten Schritt des Bestimmens einer Beschleunigung des Stromabnehmers (1a), die der Auslenkungsposition der Oberleitung (7) entspricht, aus der Verschiebung des Stromabnehmers (1a) in Höhenrichtung und der Positionsauslenkung der Oberleitung (7), wobei die Positionsauslenkung der Oberleitung (7) verwendet wird, um die Markierungen (5) aus der Vielzahl von Markierungen (5) zu bestimmen, zwischen denen sich die Oberleitung (7) befindet.

6. Erkennungsverfahren für harte Stellen eines Fahrdrahts gemäß Anspruch 5, wobei:

es sich bei der Vorrichtung (2, 3, 11) zum Messen einer Oberleitungspositionsauslenkung um eine Liniensensorkamera (3) handelt, die derart installiert ist, dass eine optische Achse derselben ungefähr gerade nach oben gerichtet ist und eine Abtastlinienrichtung derselben entlang der Fahrzeugbreitenrichtung des Schienenfahrzeugs (1) ist.

7. Erkennungsverfahren für harte Stellen eines Fahrdrahts gemäß Anspruch 5, wobei:

es sich bei der Vorrichtung (2, 3, 11) zum Messen einer Oberleitungspositionsauslenkung um einen Wegmesssensor (11) handelt, der Laserlicht auf strahlende Weise um eine zu einer Fortbewegungsrichtung des Schienenfahrzeugs (1) parallele Achse projiziert und der eine Entfernung und einen Winkel zu einem Messziel durch Empfangen des reflektierten Lichts misst.

8. Erkennungsverfahren für harte Stellen eines Fahrdrahts gemäß Anspruch 5, wobei:

es sich bei der Vorrichtung (2, 3, 11) zum Messen einer Oberleitungspositionsauslenkung um die Flächensensorkamera (2) handelt und die Bildverarbeitungsvorrichtung (6) eine Horizontalpositionsauslenkung der Oberleitung (7) durch Analysieren des Eingabebilds erhält.

## Revendications

1. Un dispositif de mesure de déplacement de pantographe comprenant :

une pluralité de marqueurs (5) apposés, de façon à être espacés dans une direction de la largeur d'un véhicule, sur une surface d'extrémité d'un pantographe (1a) sur un véhicule ferroviaire (1) ;

une caméra formant capteur de zone (2) qui est installée sur un toit du véhicule ferroviaire (1) et qui capture une image de la pluralité de marqueurs (5) ;

un dispositif de mesure d'écart de position de fil aérien (2, 3, 11) qui est installé sur le toit du véhicule ferroviaire (1) et qui mesure un écart de position d'un fil aérien (7) dans la direction de la largeur du véhicule ; et

un dispositif de traitement d'image (6) qui détermine un déplacement dans une direction de la hauteur du pantographe (1a) sur la base d'une image d'entrée capturée par la caméra formant capteur de zone (2) pendant que le véhicule ferroviaire (1) est en mouvement, et qui détermine une hauteur du pantographe (1a) en utilisant le déplacement dans une direction de la hauteur du pantographe (1a) et l'écart de position du fil aérien (7) acquis en utilisant le dispositif de mesure d'écart de position de fil aérien (2, 3, 11), l'écart de position du fil aérien (7) étant utilisé pour déterminer les marqueurs (5) parmi la pluralité de marqueurs (5), entre lesquels le fil aérien (7) est situé ;

le dispositif de traitement d'image (6) déterminant le déplacement dans une direction de la hauteur du pantographe (1a) correspondant à l'écart de position du fil aérien (7) en

- extrayant des lignes verticales à partir de l'image capturée par la caméra formant capteur de zone (2), dont chacune correspond à la position d'un marqueur (5) respectif,
- préparant respectivement les images de marqueur (9) formées par rotation de chacune des lignes verticales de 90 degrés afin de former des rangées,
- préparant, à partir d'une image qui a été capturée à l'avance par la caméra formant capteur de zone (2), des modèles de référence (10) pour des lignes uniques des marqueurs (5) respectifs sur la base des images de marqueur (9), et
- utilisant les modèles de référence (10) respectifs pour effectuer une mise en correspondance de motifs avec l'image d'entrée par comparaison des modèles de référence (10) des marqueurs (5) parmi la pluralité de marqueurs (5), entre lesquels le fil aérien (7) est situé, avec les images de marqueur (9) des marqueurs (5) parmi la pluralité de marqueurs (5), entre lesquels le fil aérien (7) est situé.

2. Le dispositif de mesure de déplacement de pantographe selon la revendication 1, dans lequel :
le dispositif de mesure d'écart de position de fil aérien (2, 3, 11) est une caméra formant capteur de ligne (3) qui est installée de sorte qu'un axe optique de celle-ci soit dirigé approximativement droit vers le haut et qu'une direction de ligne de balayage de celle-ci soit le long de la direction de la largeur de véhicule du véhicule ferroviaire (1).

3. Le dispositif de mesure de déplacement de pantographe selon la revendication 1, dans lequel :
le dispositif de mesure d'écart de position de fil aérien (2, 3, 11) est un capteur de télémétrie (11) qui projette de la lumière laser d'une manière rayonnante autour d'un axe parallèle à une direction d'avancement du véhicule ferroviaire (1), et qui mesure une distance et un angle par rapport à une cible de mesure en recevant la lumière réfléchie.

4. Le dispositif de mesure de déplacement de pantographe selon la revendication 1, dans lequel :

le dispositif de mesure d'écart de position de fil aérien (2, 3, 11) est la caméra formant capteur de zone (2), et le dispositif de traitement d'image (6) acquiert un écart de position horizontal du fil aérien (7) en analysant l'image d'entrée.

5. Un procédé de détection de point dur de fil conducteur destiné à détecter un point dur sur un fil conducteur (7) en capturant une image d'un pantographe (1a) sur un véhicule ferroviaire (1) en mouvement avec une caméra formant capteur de zone (2) installée sur un toit du véhicule ferroviaire (1), et en analysant l'image capturée par la caméra formant capteur de zone (3) avec un dispositif de traitement d'image (6) pour déterminer une accélération dans une direction de la hauteur du pantographe (1a), le procédé incluant :

une première étape consistant à installer une pluralité de marqueurs (5) de façon à ce qu'ils soient espacés dans une direction de la largeur du véhicule sur une surface d'extrémité du pantographe (1a) qui est capturée par la caméra formant capteur de zone (2) ;
une deuxième étape consistant à capturer une image des marqueurs (5) avec la caméra formant capteur de zone (2) ;
une troisième étape consistant à extraire des lignes verticales à partir de l'image capturée par la caméra formant capteur de zone (2), dont chacune correspond à la position d'un marqueur (5) respectif, et respectivement à préparer des images de marqueur (9) formées par rotation de chacune des lignes verticales de 90 degrés afin de former des rangées ;
une quatrième étape consistant à préparer des modèles de référence (10) pour des lignes uniques des marqueurs (5) respectifs sur la base des images de marqueur (9) capturées à l'avance par la caméra formant capteur de zone (2) ;
une cinquième étape consistant à capturer une image des marqueurs (5) avec la caméra formant capteur de zone (3) pendant que le véhicule ferroviaire (1) est en mouvement ;
une sixième étape consistant à utiliser les modèles de référence (10) respectifs pour effectuer une mise en correspondance de motifs avec une image d'entrée acquise lors de la cinquième étape par comparaison des modèles de référence (10) des marqueurs (5) respectifs avec les images de marqueur (9) des marqueurs (5) respectifs afin de déterminer un déplacement dans une direction de la hauteur du pantographe (1a) ;
une septième étape consistant à utiliser un dispositif de mesure d'écart de position de fil aérien (2, 3, 11) installé sur le toit du véhicule ferroviaire (1) pour mesurer un écart de position du fil aérien (7) dans la direction de la largeur du véhicule ; et
une huitième étape consistant à déterminer une accélération du pantographe (1a) correspondant à la position d'écart du fil aérien (7) à partir du déplacement dans une direction de la hauteur du pantographe (1a) et de l'écart de position du fil aérien (7), l'écart de position du fil aérien (7) étant utilisé pour déterminer les marqueurs (5) parmi la pluralité de marqueurs (5), entre lesquels le fil aérien (7) est situé.

6. Le procédé de détection de point dur de fil conducteur selon la revendication 5, dans lequel :
le dispositif de mesure d'écart de position de fil aérien (2, 3, 11) est une caméra formant capteur de ligne (3) qui est installée de sorte qu'un axe optique de celle-ci soit dirigé approximativement droit vers le haut et qu'une direction de ligne de balayage de celle-ci soit le long de la direction de la largeur de véhicule du véhicule ferroviaire (1).

7. Le procédé de détection de point dur de fil conducteur selon la revendication 5, dans lequel :
le dispositif de mesure d'écart de position de fil aérien (2, 3, 11) est un capteur de télémétrie (11) qui projette de la lumière laser d'une manière rayonnante autour d'un axe parallèle à une direction d'avancement du véhicule ferroviaire (1), et qui mesure une distance et un angle par rapport à une cible de mesure en recevant la lumière réfléchie.

8. Le procédé de détection de point dur de fil conducteur selon la revendication 5, dans lequel :

le dispositif de mesure d'écart de position de fil aérien (2, 3, 11) est la caméra formant capteur de zone (2), et le dispositif de traitement d'image (6) acquiert un écart de position horizontal du fil aérien (7) en analysant l'image d'entrée.

EP 3 936 369 B1

Fig.1

Fig.2

EP 3 936 369 B1

Fig.3

16

Fig.4

```
┌────────────────────────────┐
│           START            │
└────────────────────────────┘
              │
              ▼
╱────────────────────────────╲
│     Perform for each marker  │
╲────────────────────────────╱
              │
              ▼
┌────────────────────────────┐
│   Marker image preparation  │────  S1
└────────────────────────────┘
              │
              ▼
┌────────────────────────────┐
│   Template setting process  │────  S2
└────────────────────────────┘
              │
              ▼
╱────────────────────────────╲
│                             │
╲────────────────────────────╱
              │
              ▼
╱────────────────────────────╲
│     Perform for each marker  │
╲────────────────────────────╱
              │
              ▼
╱────────────────────────────╲
│   Perform for each image line│
╲────────────────────────────╱
              │
              ▼
┌────────────────────────────┐
│Template enlarging/shrinking process│──  S3
└────────────────────────────┘
              │
              ▼
┌────────────────────────────┐
│   Pattern matching process  │────  S4
└────────────────────────────┘
              │
              ▼
┌────────────────────────────┐
│Pantograph displacement calculation│──  S5
│           process           │
└────────────────────────────┘
              │
              ▼
╱────────────────────────────╲
│                             │
╲────────────────────────────╱
              │
              ▼
╱────────────────────────────╲
│                             │
╲────────────────────────────╱
              │
              ▼
┌────────────────────────────┐
│Overhead-wire positional deviation│──  S6
│     measurement process     │
└────────────────────────────┘
              │
              ▼
┌────────────────────────────┐
│Pantograph displacement interpolation│──  S7
│           process           │
└────────────────────────────┘
              │
              ▼
┌────────────────────────────┐
│       Filter process        │────  S8
└────────────────────────────┘
              │
              ▼
┌────────────────────────────┐
│ Acceleration calculation process│──  S9
└────────────────────────────┘
              │
              ▼
┌────────────────────────────┐
│            END             │
└────────────────────────────┘
```

17

Fig.5

Fig.6

Fig.7

} L

10

Fig.8

P

5

Fig.9

Pantograph displacement

Displacement[mm]

1251
1250.5
1250
1249.5
1249
1248.5
1248
1247.5
         −150    −100    −50     0      50     100    150    200    250

Positional deviation [mm]

Fig.10

Acceleration measurement

Fig.11

Fig.12

Fig.13

Fig.14

**EP 3 936 369 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010169506 A
- JP 2013044694 A
- JP 2000343986 A
- JP 2010266341 A
- JP 2018146553 A
- JP 2010169505 A
- JP 2006248411 A